# EUROPEAN PATENT APPLICATION

(11) **EP 4 800 267 A1**
(43) Date of publication of application: **02.09.2026**
(21) Application number: 24882081.3
(22) Date of filing: 24.09.2024
(51) Int. Cl.: F16H 57/02, B60K 17/12, H02K 7/116, H02K 11/33

(54) **DRIVE DEVICE, AND METHOD FOR MANUFACTURING DRIVE DEVICE**

(30) Priority: 24.10.2023 JP 2023182701
(71) Applicant: TOYOTA JIDOSHA KABUSHIKI KAISHA, Toyota-shi, Aichi-ken 471 8571 (JP)
(72) Inventor: ISHIBASHI Masayuki, Toyota-shi, Aichi 471-8571 (JP)
(74) Representative: TBK
(86) International application number: PCT/JP2024/033978
(87) International publication number: WO 2025/088964

(57) **Abstract**

A drive device for a vehicle is provided. The drive device for a vehicle may include: a motor including a motor shaft; a motor case that houses the motor; a first case that houses a gear unit mechanically connected to the motor; and a second case that houses a power conversion unit electrically connected to the motor. The first case and the second case are each fixed to one side of the motor case in an axial direction of the motor shaft.

## Description

### TECHNICAL FIELD

This application claims priority to Japanese Patent Application No. 2023-182701 filed on October 24, 2023. The entire contents of that application are hereby incorporated by reference into the present application. The art disclosed herein relates to a drive device for a vehicle and a method for manufacturing a drive device.

### Background Art

The drive device for a vehicle described in Japanese Patent Application Publication No. 2014-24489 has a configuration in which a motor, a gear unit, and a power conversion unit are integrated.

### Summary of Invention

### Technical Problem

In such an integrated configuration of the motor, gear unit, and power conversion unit, an attaching space for the power conversion unit may be limited.
As a result, assembly performance of the power conversion unit may be deteriorated.

### Solution to Technical Problem

A drive device for a vehicle disclosed herein may comprise: a motor including a motor shaft; a motor case that houses the motor; a first case that houses a gear unit mechanically connected to the motor; and a second case that houses a power conversion unit electrically connected to the motor. The first case and the second case may each be fixed to one side of the motor case in an axial direction of the motor shaft.

According to the above configuration, the first case that houses the gear unit and the second case that houses the power conversion unit can be configured capable of being assembled independently of each other. Since the power conversion unit can be attached with the second case removed from the motor case, the power conversion unit is free from interference by the second case when the power conversion is being attached. This can improve assembly performance of the power conversion unit.

### Brief Description of Drawings

[FIG. 1] Cross-sectional view of a schematic configuration of a drive device 1.
[FIG. 2] Perspective view of the drive device 1.
[FIG. 3] An exploded plan view of the drive device 1.
[FIG. 4] Flowchart describing an assembly process of a power conversion unit 21.
[FIG. 5] Perspective view of a drive device 1001 in a comparative example.
[FIG. 6] Perspective view of a drive device 201.
[FIG. 7] Perspective view of a drive device 301.

### Description of Embodiments

The first case may be configured capable of being assembled to the one side of the motor case with the second case fixed to the one side of the motor case. The second case may be configured capable of being assembled to the one side of the motor case with the first case fixed to the one side of the motor case.

According to the above configuration, the first case and the second case can be assembled independently of each other.

In a direction perpendicular to the axial direction of the motor shaft, at least a part of the second case may overlap the first case.

According to the above configuration, an amount by which the second case protrudes in the axial direction of the motor shaft can be reduced. This enables downsizing of the size of the drive device.

The one side of the motor case may have a first fixing surface to which the first case is fixed and a second fixing surface to which the second case is fixed. The first fixing surface and the second fixing surface may be located on a same plane.

According to the above configuration, the surface to which the first case and the second case are attached can be commonized. The assembly process can be simplified.

The power conversion unit may be fixed to the one side of the motor case. The second case may be configured capable of being assembled to the one side of the motor case with the power conversion unit fixed to the one side of the motor case.

According to the above configuration, degree of freedom of assembly of the power conversion unit can be increased.

The power conversion unit may be fixed to the second case. The second case may be configured capable of being assembled to the one side of the motor case with the power conversion unit fixed to the second case.

According to the above configuration, the degree of freedom of assembly of the power conversion unit can be increased.

The power conversion unit may include a first component including an inverter and a second component that is an electronic component electrically connected to the inverter. The first component may be configured capable of being assembled to the one side of the motor case or to the second case with the second component fixed to the one side of the motor case or to the second case. The second component may be configured capable of being assembled to the one side of the motor case or to the second case with the first component fixed to the one side of the motor case or to the second case.

According to the above configuration, by configuring the divided power conversion units to be capable of being assembled independently of each other, an attaching space can be effectively utilized. Attaching work of the power conversion units can be simplified.

One of the first component and the second component may be fixed to the one side of the motor case. The other of the first component and the second component may be fixed to the second case.

According to the above configuration, the divided power conversion units can be fixed to different parts. This can simplify the attaching work of the power conversion units.

The second case may include a case body portion having an opening and a cover portion that covers the opening. The other of the first component and the second component may be fixed to the cover portion.

According to the above configuration, the divided power conversion units can be fixed to different parts. This can simplify the installation work of the power conversion units.

The second component may include a sensor configured to detect at least one of a voltage, a current, and a temperature in the power conversion unit.

An aspect of a manufacturing method disclosed herein of a drive device for a vehicle is a manufacturing method of a drive device for a vehicle, the drive device comprising a motor case that houses a motor, a first case that houses a gear unit mechanically connected to the motor, and a second case that houses a power conversion unit electrically connected to the motor. The method comprises attaching the first case to one side of the motor case in an axial direction of the motor. The method comprises attaching the power conversion unit to the one side of the motor case with the first case attached to the one side of the motor case. The method comprises attaching the second case to the one side of the motor case with the first case and the power conversion unit attached to the one side of the motor case.

According to the above configuration, since the power conversion unit can be attached in a state before the second case is attached, the power conversion unit is not interfered with by the second case when the power conversion unit is being attached. This can improve the assembly performance of the power conversion unit.

### First Embodiment

### (Configuration of Drive Device 1)

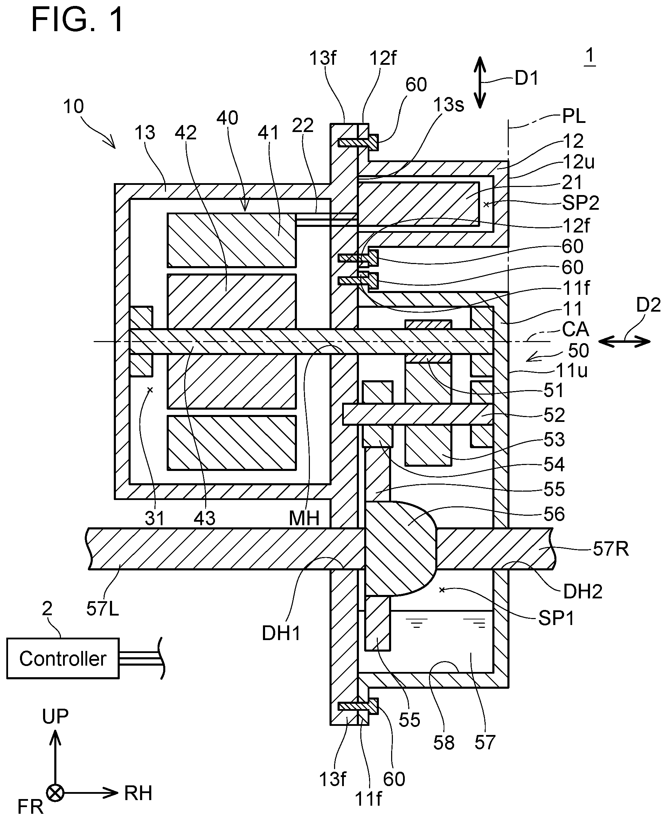

FIG. 1 is a cross-sectional view of a schematic configuration of a drive device 1 in this embodiment. The drive device 1 is an integrated device that contains a motor, a gear unit, and a power conversion unit configured to control the motor in the same casing. The directions FR, RH, and UP indicate the orientation of the drive device 1 relative to a vehicle when the drive device 1 is attached on the vehicle (electric vehicle). The direction FR indicates the front direction in a front-back direction of the vehicle. The direction RH indicates the right side of the vehicle in a left-right (or width) direction. The direction UP indicates upward in an up-down direction of the vehicle. The same is true in the other drawings. In FIG. 1, plural axes (motor shaft 43, countershaft 52, drive shafts 57L and 57R) are shown expanded so that they are located in the same plane.

The drive device 1 is controlled by a controller 2. The controller 2 comprises a CPU, RAM, ROM, input/output interface, etc. The controller 2 is connected to a power conversion unit 21 and/or other units by means of unshown signal line(s).

The drive device 1 comprises a casing 10. The casing 10 comprises a first case 11, a second case 12, and a motor case 13. The first case 11, second case 12, and motor case 13 may be cast metal.

The motor case 13 comprises a motor compartment 31. The motor compartment 31 contains a motor 40. In other words, the motor case 13 houses the motor 40. The motor 40 comprises a stator 41, a rotor 42, and a motor shaft 43. The stator 41 has a cylindrical shape. The rotor 42 is rotatably arranged inside the stator 41. The motor shaft 43 comprises a central axis CA.

The motor case 13 comprises a facing surface 13s facing the first case 11 and the second case 12. The facing surface 13s has a motor shaft hole MH and a drive shaft hole DH1. The motor shaft hole MH has the motor shaft 43 extending therethrough. The drive shaft hole DH1 has the left drive shaft 57L extending therethrough.

The first case 11 has a box shape with an opening at one side. The first case 11 is fastened to the facing surface 13s so that the opening surface is closed by the facing surface 13s. The fastening configuration thereof will be described later. As a result, a first space SP1 is defined between the motor case 13 and the first case 11. A gear unit 50 is stored in the first space SP1. In other words, the first case 11 houses the gear unit 50.

The gear unit 50 comprises a shaft gear 51, the countershaft 52, a first counter gear 53, a second counter gear 54, a ring gear 55, and a differential gear 56. The shaft gear 51 is attached to the motor shaft 43. This mechanically connects the gear unit 50 to the motor 40. A first counter gear 53 and a second counter gear 54 are attached to the countershaft 52. The first counter gear 53 meshes with the shaft gear 51. The second counter gear 54 meshes with the ring gear 55. The ring gear 55 is attached to the differential gear 56. The pair of drive shafts 57L and 57R extends from the differential gear 56 in the vehicle width direction. The drive shaft 57R extends through a drive shaft hole DH2 defined in the first case 11. A storage section 58 is disposed at the bottom of the first space SP1. Oil 57 is stored in the storage section 58. A portion of the gear unit 50 is immersed in the oil 57 stored in the storage section 58.

The second case 12 has a box shape with an opening at one side. The second case 12 is fastened to the facing surface 13s so that the open face is closed by the facing surface 13s. The fastening configuration thereof will be described later. As a result, a second space SP2 is defined between the motor case 13 and the second case 12. The power conversion unit 21 is stored in the second space SP2. In other words, the second case 12 houses the power conversion unit 21. The power conversion unit 21 is a part for controlling electric power supplied to the motor 40 and electric power generated. Examples of components included in the power conversion unit 21 are an inverter and converter. The power conversion unit 21 is electrically connected to the motor 40 by a bus bar 22.

### (Configuration of Casing 10)

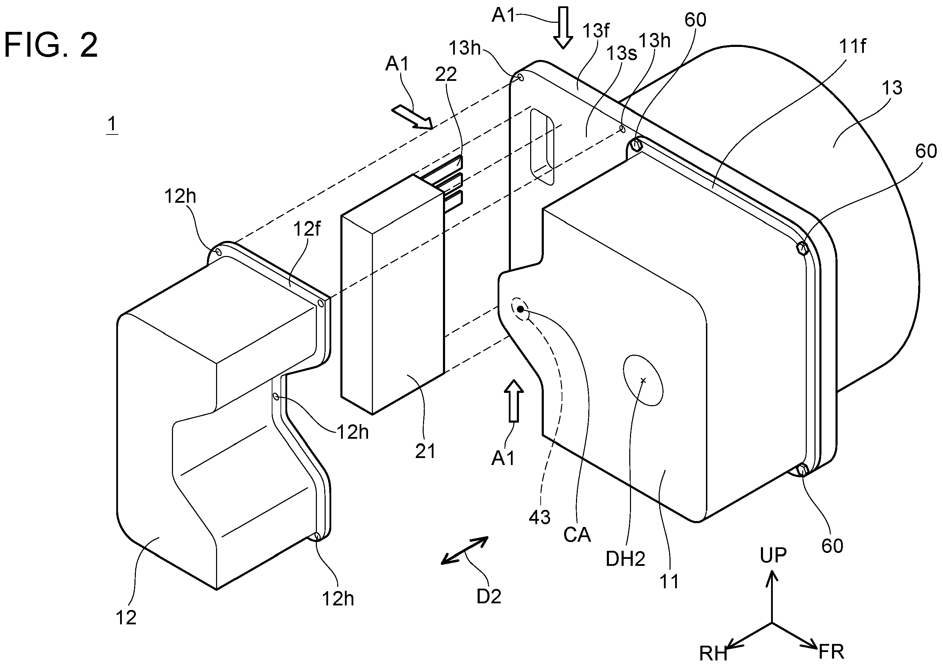

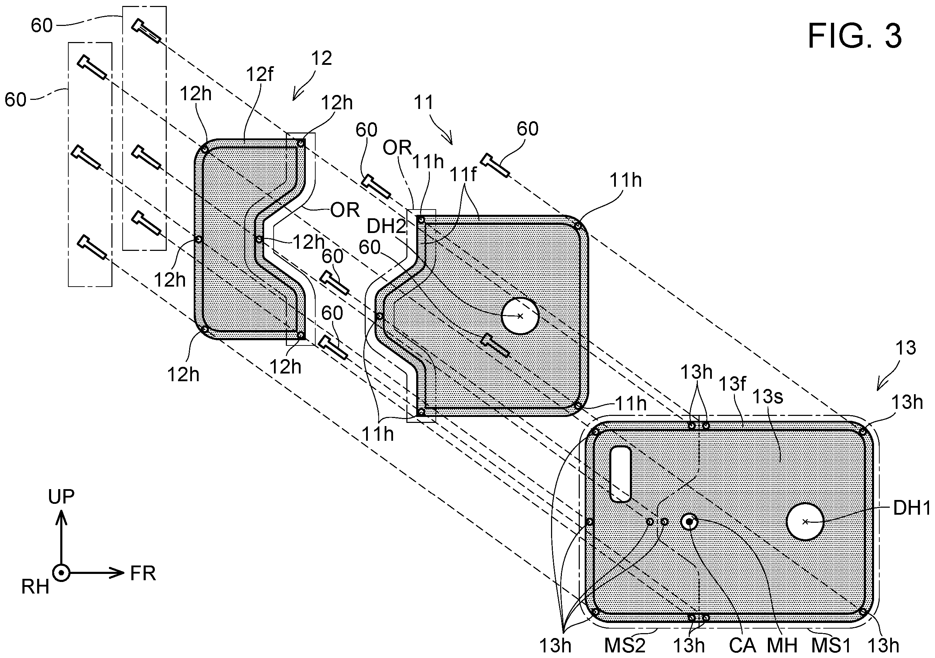

FIG. 2 shows a perspective view of the drive device 1. In FIG. 2, the second case 12 is shown removed. The position of the motor shaft 43 is indicated by a dotted line. FIG. 3 also shows an exploded plan view of the drive device 1.

The first case 11 comprises a first flange 11f extending along a perimeter of the first case 11. The second case 12 comprises a second flange 12f extending along a perimeter a perimeter of the second case 12. The motor case 13 comprises a motor case flange 13f extending along a perimeter of the motor case 13. A plurality of fastening holes 11h is disposed in the first flange 11f. A plurality of fastening holes 12h is disposed on the second flange 12f. A plurality of fastening holes 13h is disposed on the motor case flange 13f and the facing surface 13s. In this embodiment, the first flange 11f extends annularly along the perimeter of the first case 11 and the second flange 12f extends annularly along the perimeter of the second case 12, however, the disclosure herein is not limited to this configuration. The first flange 11f and the second flange 12f need only extend at least along the motor case flange 13f. In other words, the first flange 11f and the second flange 12f need not be arranged in an opposing region OR (see FIG. 3) where the first case 11 and the second case 12 face each other in a radial direction.

The first case 11 and the second case 12 are fastened to the motor case 13 by a plurality of bolts 60. The longitudinal direction of the plurality of bolts 60 is parallel to the central axis CA of the motor shaft 43. Both the first case 11 and the second case 12 are fixed to the facing surface 13s of the motor case 13. The facing surface 13s is a surface on one side (direction RH side) of the motor case 13. Although in this embodiment the plurality of bolts 60 fixes the first case 11 and the motor case 13 so that the first case 11 and the motor case 13 are in contact with each other, however, the disclosure herein is not limited to this configuration. For example, an adhesive material such as a liquid gasket (FIPG) may be interposed and fixed between the first case 11 and the motor case 13. Similarly, an adhesive material for example may be interposed and fixed between the second case 12 and the motor case 13.

The facing surface 13s has a first fixing surface MS1 to which the first case 11 is fixed and a second fixing surface MS2 to which the second case 12 is fixed. The first fixing surface MS1 and the second fixing surface MS2 are located on the same plane. This allows the attaching surface of the first case 11 and the attaching surface of the second case 12 to be commonized. The assembly process can be simplified. An end surface 11u of the first case 11 in a central axial direction D2 and an end surface 12u of the second case 12 in the central axial direction D2 are also located on a same plane PL, respectively (see FIG. 1).

When viewed along the direction of the central axis CA of the motor shaft 43, the first case 11 and the second case 12 are fixed to the motor case 13, respectively. In other words, the first flange 11f and the second flange 12f have no area of overlap with each other. As a result, the first case 11 is configured attachable to and detachable from the facing surface 13s with the second case 12 fixed to the facing surface 13s of the motor case 13. The second case 12 is also configured attachable to and detachable from the facing surface 13s with the first case 11 fixed to the facing surface 13s of the motor case 13.

### (Positional Relationship of First Case 11 And Second Case 12)

As shown in FIG. 1, a space is formed in an area opposite from the gear unit 50 with respect to the motor shaft 43 due to a dimensional difference between the motor 40 and the gear unit 50. The second case 12 is disposed in this space. That is, at least a part of the second case 12 overlaps the first case 11 in a direction D1 perpendicular to the central axis CA of the motor shaft 43. In other words, the second case 12 is disposed above the central axis CA of the motor shaft 43 in a vertical direction. This can allow effective use of the space around the motor shaft 43. Therefore, the amount by which the second case 12 protrudes in the central axial direction D2 of the motor shaft 43 can be reduced. The size of the drive device 1 can be downsized.

In the central axial direction D2, at least a part of the second case 12 overlaps the motor 40. This also can allow effective use of the space around the motor shaft 43. Therefore, the amount by which the second case 12 protrudes in the direction D1 perpendicular to the central axis CA can be reduced.

As shown in FIG. 2, the second case 12 is disposed along a part of a circumference centering on the motor shaft 43 when viewed along the central axial direction D2 of the motor shaft 43. The arrangement range of the second case 12 in a direction of motor rotation is equal to or more than 180° around the motor shaft 43. This makes it possible to ensure sufficient capacity of the second case 12.

### (Assembly Process of Power Conversion Unit 21)

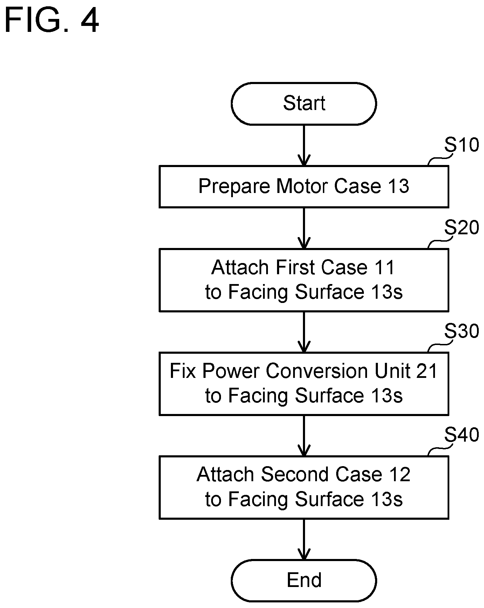

The flow chart in FIG. 4 is used to describe an assembly process of the power conversion unit 21. In step S10, the motor case 13 in which the motor 40 is housed is prepared. In step S20, the first case 11 is attached to the facing surface 13s of the motor case 13. By attaching the first case 11, the gear unit 50 is housed inside the first case 11. The gear unit 50 may be attached to the motor case 13 before step S20, or the gear unit 50 and the first case 11 may be attached to the motor case 13 as a single unit in step S20.

In step S30, the power conversion unit 21 is fixed to the facing surface 13s of the motor case 13. The fixing of the power conversion unit 21 is performed with the first case 11 attached to the facing surface 13s of the motor case 13. The configuration in which the power conversion unit 21 is fixed to the motor case 13 may vary. For example, it may be fastened by bolt(s) for example, which are not shown in the figures. In step S30, the power conversion unit 21 is electrically connected to the motor 40 via the bus bar 22. For example, the bus bar 22 may be fastened to an unshown terminal block of the power conversion unit 21 by means of unshown bolt(s) for example.

In step S40, the second case 12 is attached to the facing surface 13s of the motor case 13. This step is performed with the first case 11 and the power conversion unit 21 attached to the facing surface 13s. This houses the power conversion unit 21 inside the second case 12.

Effects of the assembly process will be described below. Since the power conversion unit 21 is a precision component, it is necessary to prevent oil and foreign matters, for example, from entering the unit. In the assembly process herein, the power conversion unit 21 can be assembled with the first case already assembled. Oil, for example, scattered during assembly of the first case will not enter the power conversion unit 21. The power conversion unit 21 can be covered with the second case 12 immediately after the power conversion unit 21 is assembled. Since time during which the power conversion unit 21 is exposed to atmosphere can be shortened, it is possible to prevent foreign matter, for example, from entering the power conversion unit 21.

### (Effect)

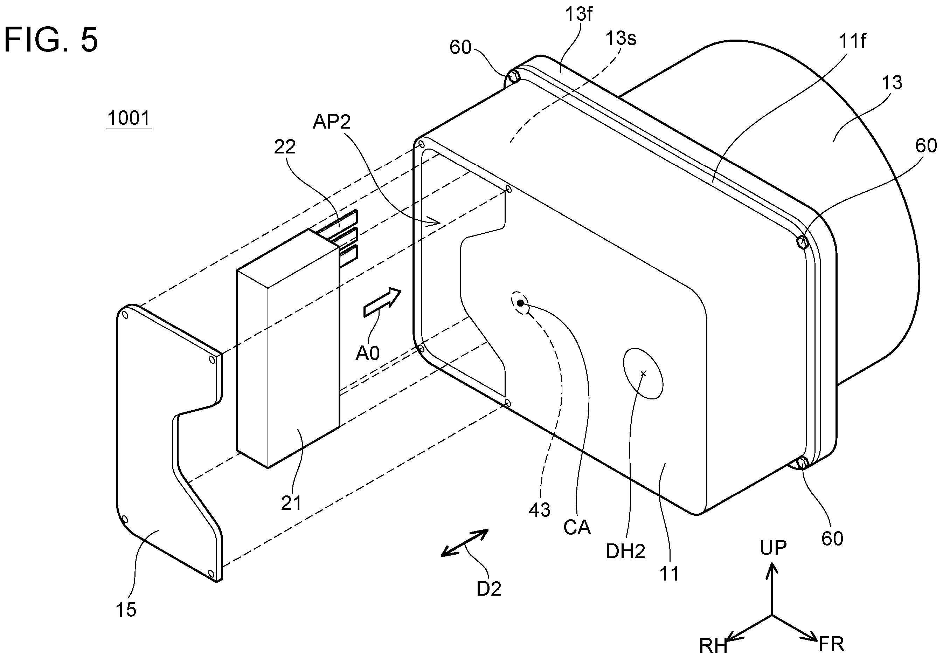

First, a problem will be described using a drive device 1001 of a comparative example shown in FIG. 5. The drive device 1001 of the comparative example (FIG. 5) does not comprise a second case 12, unlike the drive device 1 (FIG. 2) in this embodiment. A second space SP2 for storing the power conversion unit 21 is formed in the first case 11. It also comprises a cover 15 for closing an opening AP2 of the second space SP2. In the drive device 1001 of the comparative example, a case in which the power conversion unit 21 is attached to the facing surface 13s of the motor case 13 will be described. The facing surface 13s is located at the bottom of the second space SP2. Therefore, an access direction of an assembly tool to the facing surface 13s is limited to the central axial direction D2 through the opening AP2 (see arrow A0). This makes it difficult for the tool to access a contact area between the power conversion unit 21 and the facing surface 13s, which deteriorates the assembly performance.

Therefore, in the art of this embodiment, the first case 11 which houses the gear unit 50 and the second case 12which houses the power conversion unit 21 are configured separately and configured not to overlap each other in the central axial direction D2. As shown in FIG. 2, since this makes it possible to attach the power conversion unit 21 with only the second case 12 removed from the motor case 13, the power conversion unit 21 is free from the interference by the second case 12 when the power conversion unit 21 is being attached. That is, the power conversion unit 21 can be attached with the facing surface 13s exposed (step S30). Therefore, the access direction of the tool to the contact area between the power conversion unit 21 and the facing surface 13s can be expanded to the up-down and rear directions of the vehicle (see arrow A1). The assembly performance of the power conversion unit 21 can be improved.

### (Variations for First Embodiment)

The configuration of fixing the power conversion unit 21 may be varied. For example, the power conversion unit 21 may be fixed to the inner surface of the second case 12 in step S30 described above. This allows the second case 12 to be configured to be attachable to and detachable from the facing surface 13s of the motor case 13 with the power conversion unit 21 fixed to the inner surface of the second case 12. Then, in the above-mentioned step S40, the second case 12 with the power conversion unit 21 fixed to its inner surface can be attached to the facing surface 13s. At this time, for example, the bus bar 22 may be inserted into an unshown insertion slot of the power conversion unit 21. This allows the power conversion unit 21 to be electrically connected to the motor 40 via the bus bar 22. This type of arrangement also allows for a higher degree of freedom in assembling the power conversion unit 21.

### Second Embodiment

The second embodiment differs from the first embodiment in that the power conversion unit 21 is divided into a first component 21_1 and a second component 21_2. The same symbols will be attached to parts that are common between the first embodiment and the second embodiment, and descriptions thereof will be omitted.

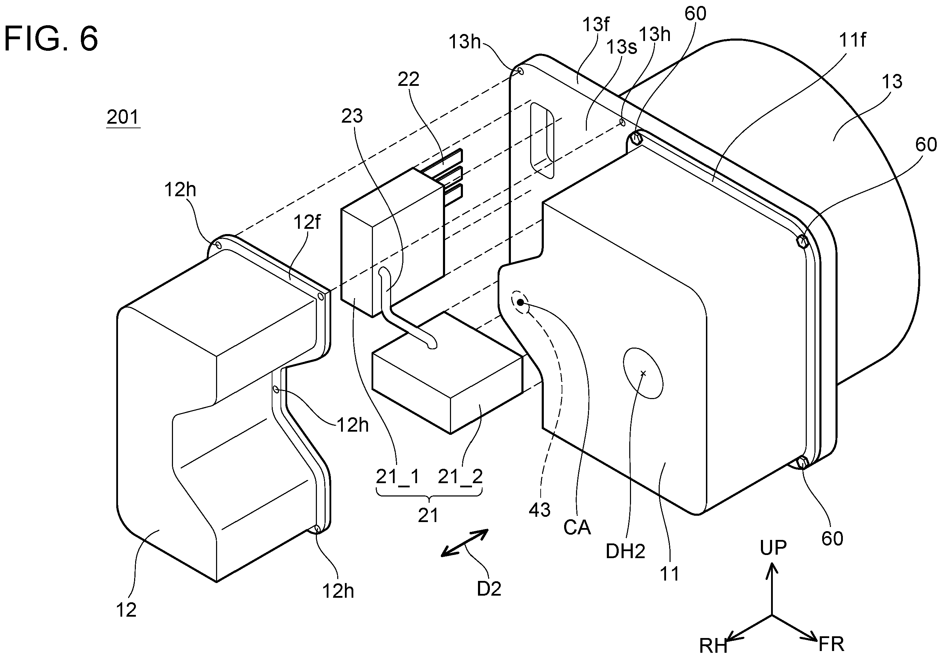

FIG. 6 shows a perspective view of a drive device 201 of the second embodiment. FIG. 6 shows the second case 12, the first component 21_1, and the second component 21_2 removed. The first component 21_1 is a component that includes an inverter. In other words, the first component 21_1 is a component connected to the bus bar 22. The second component 21_2 is an electrical component that is electrically connected to the inverter of the first component 21_1. The second component 21_2 may have at least one of various sensor(s), a DCDC converter, a coil, a capacitor, for example. Examples of the various sensor(s) include a sensor configured to detect at least one of a voltage, a current, and a temperature in the power conversion unit 21. The first component 21_1 and the second component 21_2 are electrically connected by wiring 23. The wiring 23 may be a bus bar. As a variation, there may be other component(s) further interposed between the first component 21_1 and the second component 21_2.

Each of the first component 21_1 and the second component 21_2 can be fixed to the facing surface 13s of the motor case 13 or to the inner surface of the second case 12. Specifically, the following four fixing configurations can be taken. (1) Configuration in which the first component 21_1 and the second component 21_2 are both fixed to the facing surface 13s. (2) Configuration in which the first component 21_1 and the second component 21_2 are both fixed to the inner surface of the second case 12. (3) Configuration in which the first component 21_1 is fixed to the facing surface 13s and the second component 21_2 is fixed to the inner surface of the second case 12. (4) Configuration in which the first component 21_1 is fixed to the inner surface of the second case 12 and the second component 21_2 is fixed to the facing surface 13s.

This allows the first component 21_1 to be configured to be attachable to and detachable from the facing surface 13s or the inner surface of the second case 12 with the second component 21_2 fixed to the facing surface 13s or the inner surface of the second case 12. The second component 21_2 can be configured to be attachable to and detachable from the facing surface 13s or the inner surface of the second case 12 with the first component 21_1 fixed to the facing surface 13s or the inner surface of the second case 12.

### (Effect)

Compared to the case where the power conversion unit 21 is an integrated type, the power conversion unit 21 can be disposed in accordance with the shape of the attaching space if the power conversion unit 21 is divided into the first component 21_1 and the second component 21_2. This enables effective use of the attaching space.

When both the first component 21_1 and the second component 21_2 are fixed to the facing surface 13s or to the inner surface of the second case 12, the first component 21_1 and the second component 21_2 may interfere with each other and may make the attaching work difficult. By adopting a fixing configuration in which one of the first component 21_1 and second component 21_2 is fixed to the facing surface 13s and the other is fixed to the inner surface of the second case 12, mutual interference during attaching of the first component 21_1 and second component 21_2 can be eliminated. This simplifies the attaching work of the power conversion unit 21.

### Third Embodiment

The third embodiment differs from the second embodiment in that the second case 12 comprises a case body portion 12b and a cover portion 12c. The same symbols will be attached to parts that are common between the second embodiment and the third embodiment, and descriptions thereof will be omitted.

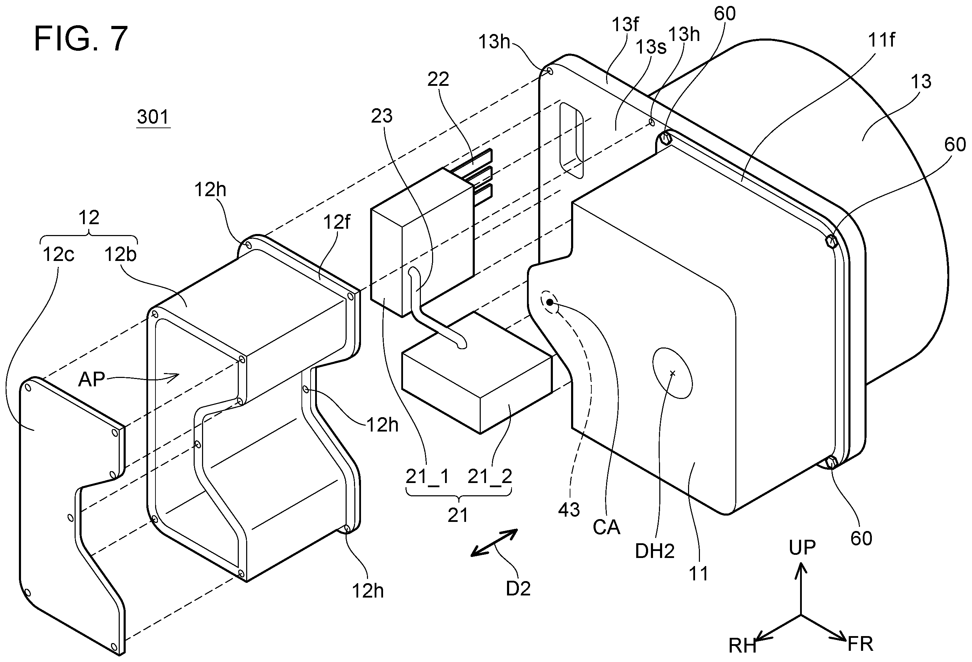

FIG. 7 shows a perspective view of a drive device 301 of the third embodiment. In FIG. 7, the second case 12, the first component 21_1 and the second component 21_2 are shown removed. The second case 12 comprises a case body portion 12b with an opening AP and a cover portion 12c covering the opening AP.

Each of the first component 21_1 and the second component 21_2 can be fixed to the facing surface 13s of the motor case 13 or a back surface of the cover portion 12c. Specifically, the following four fixing configurations can be taken. (1) Configuration in which the first component 21_1 and the second component 21_2 are both fixed to the facing surface 13s. (2) Configuration in which the first component 21_1 and the second component 21_2 are both fixed to the back surface of the cover portion 12c. (3) Configuration in which the first component 21_1 is fixed to the facing surface 13s and the second component 21_2 is fixed to the back surface of the cover portion 12c. (4) Configuration in which the first component 21_1 is fixed to the back surface of the cover portion 12c and the second component 21_2 is fixed to the facing surface 13s.

The same effect as in the aforementioned second embodiment can be obtained by the configurations of the third embodiment.

Specific examples of the present invention have been described in detail, however, these are mere exemplary indications and thus do not limit the scope of the claims. The art described in the claims includes modifications and variations of the specific examples presented above. Technical features described in the description and the drawings may technically be useful alone or in various combinations, and are not limited to the combinations as originally claimed. Further, the art described in the description and the drawings may concurrently achieve a plurality of aims, and technical significance thereof resides in achieving any one of such aims.

### (Variations)

In FIG. 3, the first fixing surface MS1 and the second fixing surface MS2 are not limited to being located on the same plane. For example, planar positions of the first fixing surface MS1 and the second fixing surface MS2 may be different from each other, and a step may be formed at the boundary between them.

The configuration in which the power conversion unit 21 is divided may vary. For example, the power conversion unit 21 may be composed of three or more components.

The vehicle in which the drive device herein is installed is not limited to an electric vehicle. The drive device disclosed herein can, for example, be installed in a hybrid vehicle and a plug-in hybrid vehicle. In this case, the drive device herein may contain a plurality of motors in a casing and/or a planetary gear mechanism. The drive device herein can also be applied to a vehicle that uses an electric motor for at least part of its travels, such as a fuel cell vehicle, for example.

## Claims

1. A drive device for a vehicle, the drive device comprising:
a motor including a motor shaft;
a motor case that houses the motor;
a first case that houses a gear unit mechanically connected to the motor; and
a second case that houses a power conversion unit electrically connected to the motor,
wherein the first case and the second case are each fixed to one side of the motor case in an axial direction of the motor shaft.

2. The drive device according to claim 1, wherein
the first case is configured capable of being assembled to the one side of the motor case with the second case fixed to the one side of the motor case, and
the second case is configured capable of being assembled to the one side of the motor case with the first case fixed to the one side of the motor case.

3. The drive device according to claim 1 or 2, wherein
in a direction perpendicular to the axial direction of the motor shaft, at least a part of the second case overlaps the first case.

4. The drive device according to any one of claims 1 to 3, wherein
the one side of the motor case has a first fixing surface to which the first case is fixed and a second fixing surface to which the second case is fixed, and
the first fixing surface and the second fixing surface are located on a same plane.

5. The drive device according to any one of claims 1 to 4, wherein
the power conversion unit is fixed to the one side of the motor case, and
the second case is configured capable of being assembled to the one side of the motor case with the power conversion unit fixed to the one side of the motor case.

6. The drive device according to any one of claims 1 to 4, wherein
the power conversion unit is fixed to the second case, and
the second case is configured capable of being assembled to the one side of the motor case with the power conversion unit fixed to the second case.

7. The drive device according to any one of claims 1 to 6, wherein
the power conversion unit includes a first component including an inverter and a second component that is an electronic component electrically connected to the inverter,
the first component is configured capable of being assembled to the one side of the motor case or to the second case with the second component fixed to the one side of the motor case or to the second case, and
the second component is configured capable of being assembled to the one side of the motor case or to the second case with the first component fixed to the one side of the motor case or to the second case.

8. The drive device according to claim 7, wherein
one of the first component and the second component is fixed to the one side of the motor case, and
the other of the first component and the second component is fixed to the second case.

9. The drive device according to claim 7 or 8, wherein
the second case includes a case body portion having an opening and a cover portion that covers the opening, and
the other of the first component and the second component is fixed to the cover portion.

10. The drive device according to any one of claims 7 to 9, wherein
the second component includes a sensor configured to detect at least one of a voltage, a current, and a temperature in the power conversion unit.

11. A manufacturing method of a drive device for a vehicle, the drive device comprising a motor case that houses a motor, a first case that houses a gear unit mechanically connected to the motor, and a second case that houses a power conversion unit electrically connected to the motor, the method comprising:
attaching the first case to one side of the motor case in an axial direction of the motor;
attaching the power conversion unit to the one side of the motor case with the first case attached to the one side of the motor case; and
attaching the second case to the one side of the motor case with the first case and the power conversion unit attached to the one side of the motor case.
